# EUROPÄISCHE PATENTANMELDUNG

(11) **EP 2 544 355 A1**
(43) Veröffentlichungstag der Anmeldung: **09.01.2013**
(21) Anmeldenummer: 11173232.7
(22) Anmeldetag: 08.07.2011
(51) Int. Cl.: H02M 7/5387

(54) **Steueransatz für einen Wechselrichter zur Erhöhung der Lastwechselfestigkeit**

(71) Anmelder: SIEMENS AKTIENGESELLSCHAFT, 80333 München (DE)
(72) Erfinder: Frühauf, Markus, 91080 Uttenreuth (DE)

(57) **Zusammenfassung**

Es wird ein Regler (4,44) zum Vorgeben einer Pulsfrequenz (30) für eine Hilfsspannung (22) angegeben, wobei die Hilfsspannung (22) zum Erzeugen von Ansteuersignalen (18) für einen Wechselrichter (10) vorgesehen ist und eine Pulsweitenmodulation für eine von dem Wechselrichter (10) auszugebene Spannung vorgibt. Der Regler (4,44) ist dazu vorgesehen, die Temperatur (6) des Wechselrichters (10) oder eine damit korrelierte Größe zu erfassen und die Pulsfrequenz (30) derart einzustellen, dass die Temperatur (6) des Wechselrichters (10) einem Solltemperaturverlauf (34) folgt.

## Beschreibung

Die Erfindung betrifft einen Regler zum Vorgeben einer Pulsfrequenz für die Ansteuerung eines Wechselrichters. Die Erfindung bezieht sich des Weiteren auf einen den Regler und einen Wechselrichter umfassenden Regelkreis sowie auf ein Verfahren zur Vorgabe der Pulsfrequenz für die Ansteuerung des Wechselrichters.

Ein Umrichter ist ein elektrisches Bauelement zum Verändern der Frequenz und/oder Amplitude einer Wechselspannung. Dazu weist der Umrichter in der Regel einen Gleichrichter und einen Wechselrichter auf. Der Gleichrichter empfängt die zugeführte Wechselspannung und richtet diese gleich. Der Wechselrichter formt die resultierende Gleichspannung dann wieder in eine Wechselspannung mit der neuen, einzustellenden Frequenz um. Die Masche zwischen Gleichrichter und Wechselrichter wird auch als Zwischenkreis bezeichnet. In der Regel wird die in dem Zwischenkreis anliegende Gleichspannung durch einen Zwischenkreiskondensator stabilisiert.

Der Wechselrichter weist für jede Phase der Wechselspannung zwei (Halbleiter-)Schalter auf, die zwischen eine Phasenklemme und eine Plusschiene des Zwischenkreises bzw. zwischen die Phasenklemme und eine Minusschiene des Zwischenkreises geschaltet sind. Der mit der Plusschiene verbundene Schalter ist nachfolgend auch als "hochpotentialseitiger" Schalter bezeichnet. Der mit der Minusschiene verbundene Schalter ist entsprechend auch als "niederpotentialseitiger" Schalter bezeichnet.

Jeder Schalter ist in der Lage, eine der Halbwellen der an der Phasenklemme auszugebenden Wechselspannung basierend auf einer Pulsfrequenz pulsweitenmoduliert zu erzeugen.

In dem Umrichter, und dort insbesondere in dem Wechselrichter fällt eine mit zunehmender Pulsfrequenz und zunehmender Stromamplitude steigende Verlustleistung an. Diese Verlustleistung wird in Wärme umgesetzt, die zu einer Belastung, oder sogar Beschädigung der Halbleiterschalter führen kann.

Bei Anwendungen mit ausgeprägten Lastwechseln verschärft sich das Kühlproblem weiter. Bei einem Motor können derartige Lastwechsel beispielsweise durch häufige und/oder starke Änderung der Drehzahl versursacht sein, wie sie beispielsweise bei Zentrifugen, Extrudern oder Servopressen im gewöhnlichen Betrieb regelmäßig auftreten. In diesen Anwendungen kommt es entsprechend zu hohen Temperaturschwankungen (auch Temperaturhübe genannt), durch die die Chips hohen Belastungen ausgesetzt sind, die die Lebensdauer der Chips weiter reduzieren. Zur Entschärfung dieser Temperaturproblematik müssen die Halbleiterschalter und deren Kühlflächen im Vergleich zu der Leistung, für die sie tatsächlich ausgelegt sind, stark überdimensioniert werden, um einen allzu starken Temperaturanstieg zu vermeiden. Dies führt zu erheblichen Mehrkosten bei der Herstellung eines Umrichters. Zudem erfordert die Leistungselektronik eines solchen Umrichters aufgrund der Überdimensionierung einen großen Baubedarf.

Der Erfindung liegt daher die Aufgabe zugrunde, einen halbleiterschonenden Betrieb eines Wechselrichters bei vergleichsweise kleiner Dimensionierung der Halbleiter und deren Kühlflächen zu ermöglichen.

Die Aufgabe wird erfindungsgemäß durch die Merkmale der unabhängigen Ansprüche gelöst. Die abhängigen Ansprüche enthalten bevorzugte Ausführungen und Weiterbildungen der Erfindung.

Der Erfindung liegt der Gedanke zugrunde, dass im Wechselrichter zwei verschiedene Größen zur Verlustleistung und damit zur Wärmebildung beitragen, nämlich die Stromamplitude und die Pulsfrequenz. Erkanntermaßen tragen die häufigen Schaltprozesse im gepulsten Betrieb der Halbleiterschalter in erheblichem Maße zur der Verlustleistung bei, so dass die Verlustleistung (und damit die Wärmebildung) über die Pulsfrequenz effektiv beeinflusst ist.

Die Erfindung schlägt nun vor, die Pulsfrequenz als Stellgröße in einem Regelkreis heranzuziehen, um einen vollständigen oder zumindest teilweisen Temperaturausgleich auf einem den Wechselrichter enthaltenden Chip zu erzwingen. So kann beispielsweise die Pulsfrequenz gesenkt werden, wenn die Temperatur über eine Solltemperatur als Maß für den Temperaturausgleich ansteigt, um die Erwärmung des Chips zu stoppen. Umgekehrt kann die Pulsfrequenz erhöht werden, wenn die Temperatur unter die Solltemperatur fällt, um den Chip warm zu halten.

Die Erfindung gibt hierzu einen Regler zum Vorgeben einer Pulsfrequenz für eine Hilfsspannung an, die zum Erzeugen von Ansteuersignalen für einen Wechselrichter vorgesehen ist. Die Hilfsspannung gibt dabei eine Pulsweitenmodulation (PWM) für eine von dem Wechselrichter auszugebende, gepulste Ausgabespannung vor. Erfindungsgemäß ist der Regler dazu vorgesehen (d.h. eingerichtet), die Temperatur des Wechselrichters oder eine damit korrelierte Größe zu erfassen und die Pulsfrequenz derart einzustellen, dass die Temperatur des Wechselrichters einem Solltemperaturverlauf folgt. Insbesondere kann der Regler dazu vorgesehen sein, die Pulsfrequenz derart einzustellen, dass die Temperatur des Wechselrichters konstant gehalten wird.

Durch den erfindungsgemäßen Regler können Temperaturhübe in einem den Wechselrichter enthaltenden Chips wirkungsvoll eliminiert oder zumindest reduziert werden. Auf diese Weise kann bei der Dimensionierung der Kühlung der Chips auf eine Berücksichtigung von Lastwechseln verzichtet werden, wodurch die Chipoberflächen und/oder die mit den Chipoberflächen in Wärmekontakt stehenden Kühlkörper kleiner ausgelegt werden können. Dadurch lässt sich der Wechselrichter vergleichsweise preiswert und kompakt realisieren. Außerdem lässt sich mit vergleichsweise geringem Aufwand eine wesentliche Steigerung der Lastwechselfestigkeit und Lebensdauer für den Wechselrichter erzielen.

Die Erfindung ist auch dann vorteilhaft einsetzbar, wenn der Regler den Solltemperaturverlauf nicht exakt einregeln kann, oder wenn der Solltemperaturverlauf so ausgelegt ist, dass dennoch eine zusätzliche Kühlung zur Reduktion von thermischen Lastwechseln notwendig ist.

In einer bevorzugten Ausbildung der Erfindung kann der Regler zum Einstellen der Pulsfrequenz innerhalb eines vorgegebenen Frequenzbereichs vorgesehen sein. Auf diese Weise kann der Betriebsbereich der Last bei der Dimensionierung eines Regelkreises mit dem erfindungsgemäßen Regler berücksichtigt werden, so dass die Last nicht in unbekannten Betriebszuständen betrieben wird.

In einer besonders bevorzugten Ausbildung der Erfindung kann der Wechselrichter zur elektrischen Energieversorgung eines Motors vorgesehen sein. Die untere Grenzfrequenz des Frequenzbereichs ist in diesem Fall bevorzugt derart gewählt, dass die Ausgabespannung eine Glätte aufweist, bei der ein Momentenrippel am Motor gleich einem für den Motor maximal zulässigen Momentenrippel ist. Unter der Glätte der Ausgabespannung wird erfindungsgemäß ein Maß verstanden, das angibt, mit welcher Genauigkeit die von dem Wechselrichter ausgegebene Wechselspannung - im zeitlichen Mittel über die Pulstaktdauer - eine als Eingangssignal vorgegebene Referenzspannung nachgebildet, z.B. die durchschnittliche quadrierte Abweichung der über die Pulstaktdauer gemittelten Ausgabespannung von der Referenzspannung. Durch diese bevorzugte Ausbildung der Erfindung können der Motor und die gegebenenfalls von diesem angetriebene Maschine wirkungsvoll vor Schäden geschützt werden, die durch ein zu hohes Schlagen der Motorwelle entstehen können. Dies kann bei hohen Drehzahlen, wie sie beispielsweise bei einer Zentrifuge notwendig sind, entscheidend für den fehlerfreien Betrieb der gesamten Anwendung sein.

Zusätzlich oder alternativ hierzu kann die obere Grenzfrequenz des Frequenzbereichs derart gewählt sein, dass die einzustellende Frequenz gleich einer für den Wechselrichter maximal zulässigen Frequenz ist.

In einer vereinfachten Ausführung der Erfindung kann der Regler dazu vorgesehen sein, die Pulsfrequenz in Abhängigkeit eines vom Wechselrichter ausgegebenen (Last-)Stromes zu variieren. Es wird dabei als Regelgröße nicht unmittelbar die Temperatur herangezogen. Vielmehr nimmt der Regler als Maß für die Temperaturentwicklung vereinfachend den Augenblickswert des Laststroms. In einer bevorzugten Ausführungsform erhöht oder senkt der Regler hierbei die Pulsfrequenz, wenn der Augenblickswert des erfassten Laststromes einen zugeordneten Schwellwert unter- bzw. überschreitet. Auf diese Weise kann der Regler besonders kostengünstig hergestellt werden, da aufwändige Einrichtungen zur Erfassung oder Modellierung der Chiptemperatur entfallen können.

In einer besonders einfachen und kostengünstigen Ausführung kann der Regler insbesondere als Zweipunktregler ausgebildet werden, der lediglich zwischen zwei Werten der Pulsfrequenz wechselt. Für eine verfeinerte Regelung des Temperaturverlaufs kann der Regler aber auch als Proportionalregler (P-Regler) oder Proportionalregler mit Integralanteil (PI-Regler) ausgebildet sein.

Erfindungsgemäß wird auch ein Regelkreis angegeben, der zusätzlich zu dem erfindungsgemäßen Regler einen Wechselrichter als Regelstrecke und eine Temperaturerfassungseinrichtung umfasst.

Die Temperaturerfassungseinrichtung kann die Temperatur direkt erfassen oder indirekt über eine Größe, aus der die Temperatur des Wechselrichters (beziehungsweise des Chips in dem der Wechselrichter angeordnet ist) abgeleitet werden kann. Dies kann beispielsweise der vom Wechselrichter abgegebene Laststrom sein.

In einer bevorzugten Ausführung kann die Temperaturerfassungseinrichtung dazu vorgesehen sein, die Temperatur des Wechselrichters basierend auf einem Lastzustand des Wechselrichters zu berechnen. Eine derartige Temperaturerfassungseinrichtungen berechnet üblicherweise anhand eines thermischen Modells des Chips die Chiptemperatur, um daraus Schutzfunktionen für den Wechselrichter oder einen den Wechselrichter enthaltenden Umrichter, insbesondere eine Überlastabschaltung, abzuleiten. Durch die bevorzugte Ausführung kann der Verwendungszweck einer solchen, an sich üblichen Temperaturerfassungseinrichtung nutzbringend erweitert werden.

Erfindungsgemäß wird ferner auch ein Verfahren zum Vorgeben einer Pulsfrequenz für eine Hilfsspannung der oben genannten Art angegeben. In diesem Verfahren werden die Temperatur des Wechselrichters oder eine damit korrelierte Größe erfasst und die Pulsfrequenz derart eingestellt, dass die Temperatur des Wechselrichters einem Solltemperaturverlauf folgt.

Die Erfindung wird nachstehend anhand einer Zeichnung näher beschrieben. Darin zeigen:

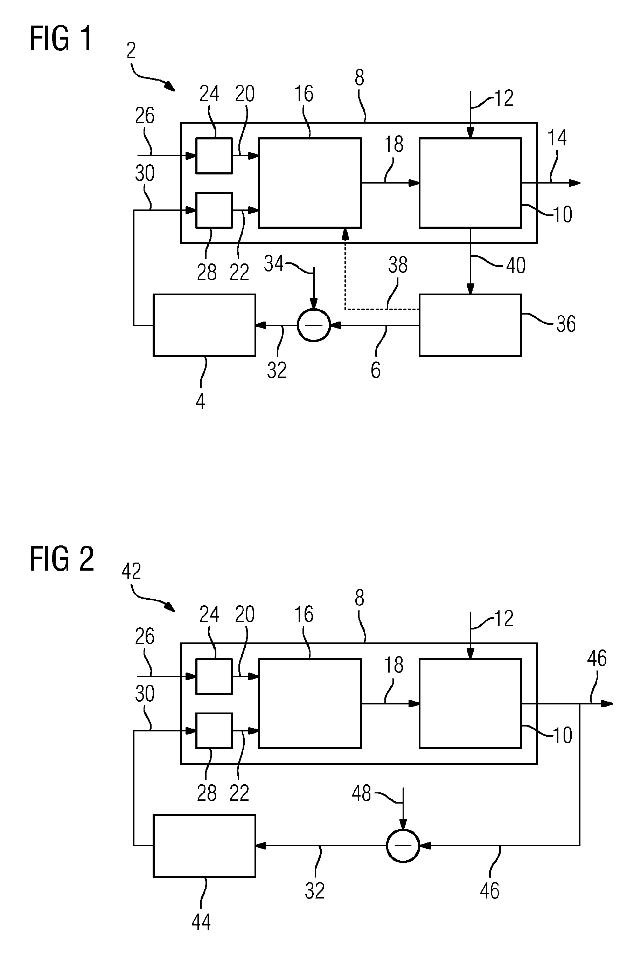

- FIG 1: eine schematische Darstellung eines Regelkreises mit einem Regler gemäß einem ersten Ausführungsbeispiel der Erfindung,
- FIG 1: eine schematische Darstellung eines Regelkreises mit einem Regler gemäß einem zweiten Ausführungsbeispiel der Erfindung,
- FIG 3: Diagramme zur Erklärung der Erzeugung der Steuerpulse zur Ansteuerung des Umrichters,
- FIG 4: eine schematische Darstellung von Messergebnissen des erfindungsgemäßen Reglers bei der Anwendung zur Steuerung einer Zentrifuge, und
- FIG 5: Lastwechselkurven zur Auswertung der Messergebnisse aus FIG 4.

FIG 1 zeigt schematisch einen Regelkreis 2 mit einem Regler 4 gemäß einem ersten Ausführungsbeispiel der Erfindung.

Der Regler 4 steuert als Regelstrecke die Ist-Temperatur 6 eines Chips 8, in dem ein Umrichter 10 zum Umwandeln einer Eingangsspannung 12 in eine Ausgangsspannung 14 angeordnet ist. Der Umrichter 10 wird von einer Ansteuerung 16 mit Steuerpulsen 18 angesteuert, um intern seine - nicht explizit dargestellten - (Halbleiter-)Schalter für die Frequenzumwandlung zu öffnen und zu schließen. In einer später noch zu erläuternden Art und Weise bestimmt die Ansteuerung 16 die Steuerpulse 18 aus einem Referenzsignal 20 und einem Pulssignal 22. Das Pulssignal 22 ist insofern eine Hilfsspannung zur Erzeugung der Steuerpulse 18. Die Signale 20 und 22 werden in einem Referenzgenerator 24 basierend auf einer vorgegebenen Referenzfrequenz 26 beziehungsweise in einem Pulsgenerator 28 basierend auf einer vorgegebenen Pulsfrequenz 30 erzeugt.

Als Grundlage für die Steuerung empfängt der Regler 4 in der vorliegenden Ausführungsform eine Regeldifferenz 32 aus einer Soll-Temperatur 34 und der Ist-Temperatur 6 und gibt basierend darauf die Pulsfrequenz 30 aus. Alternativ kann der Regler 4 auch einen Korrekturwert für die Pulsfrequenz 30 ausgeben, wenn die Pulsfrequenz 30 beispielsweise voreingestellt ist. Die Solltemperatur 34 ist die Temperatur des Chips, auf die sich der Chip 8 im Mittel aufheizen soll.

Die Ist-Temperatur 6 kann direkt durch einen Temperatursensor gemessen werden. In der vorliegenden Ausführungsform wird jedoch eine herkömmliche Temperaturüberwachungsfunktion 36 genutzt, deren vordergründige und an sich übliche Funktion darin besteht, die Ist-Temperatur 6 des Chips 8 zu überwachen und im Notfall eine geeignete Schutzmaßnahme 38 zu ergreifen, um eine Beschädigung des Chips 8 zu vermeiden. Dies kann beispielsweise das Stoppen der Ansteuerung 16 umfassen, um den Betrieb des Umrichters 10 abzustellen.

Die Temperaturüberwachungsfunktion 36 überwacht den Lastzustand 40 des Chips 8 beispielsweise durch Auswertung des durch den Umrichter 10 fließenden Stroms und berechnet basierend darauf in einem Temperatur-Modell die Ist-Temperatur 6. In der vorliegenden Ausführung wird die Ist-Temperatur 6 auch zur Regelung der Temperaturhübe des Chips 8 herangezogen. Auf diese Weise kann die Temperaturüberwachungsfunktion 36 nicht nur in Notfällen, sondern auch im normalen Regelbetrieb des Chips 8 nutzbringend verwendet werden.

FIG 2 zeigt eine schematische Darstellung eines Regelkreises 42 mit einem Regler 44 gemäß einem zweiten Ausführungsbeispiel der Erfindung. In FIG 2 werden zu FIG 1 gleiche Elemente mit gleichen Bezugszeichen versehen und nicht noch einmal beschrieben.

Der Regler 44 des zweiten Ausführungsbeispiels empfängt als Regeldifferenz 32 die Differenz aus einem Ist-Strom 46 des Umrichters 10 und einem Soll-Strom 48 für den Umrichter 10. Diese Regeldifferenz 32 wird von dem Regler 44 als vereinfachtes Maß für die Temperaturentwicklung im Chip herangezogen, wodurch eine ressourcenintensive und zeitintensive Berechnung der Ist-Temperatur 6 des Chips 8 entfällt.

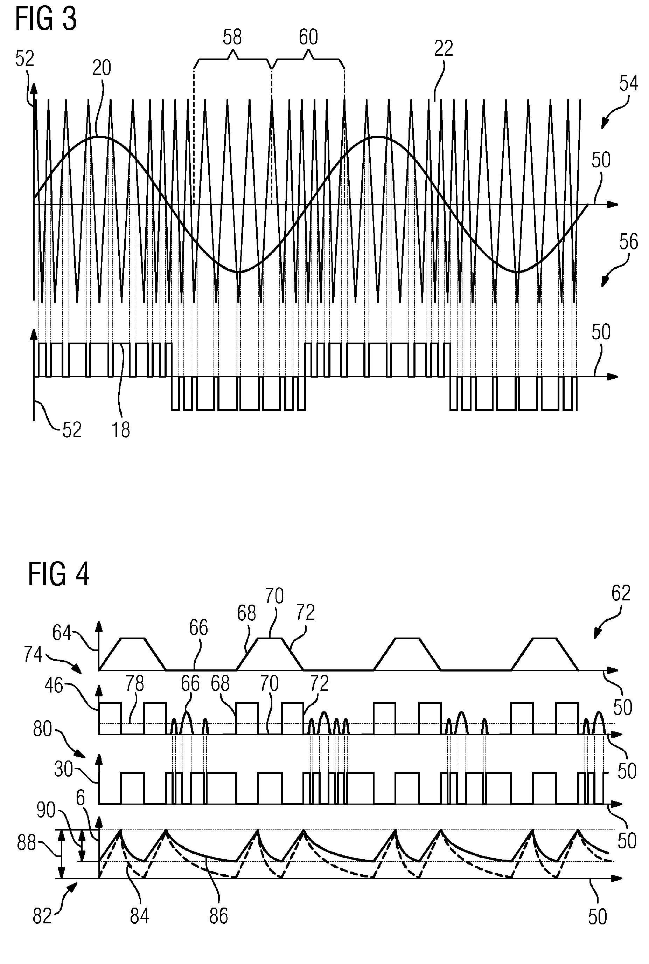

FIG 3 zeigt zwei synchrone Diagramme 54, 56, in denen über die Zeit 50 die Spannung 52 aufgetragen ist. Anhand dieser beiden Diagramme 54 und 56 soll die Erzeugung der Steuerpulse 18 zur Ansteuerung des jeweiligen Umrichters 10 aus FIG 1 oder FIG 2 erklärt werden.

In FIG 3 ist im ersten Diagramm 54 das Referenzsignal 20 dem Pulssignal 22 gegenübergestellt. Wie aus der Darstellung erkennbar ist, handelt es sich bei dem Referenzsignal 20 um ein zeitlich sinusförmig mit vergleichsweise niedriger Frequenz oszillierendes Spannungssignal. Bei dem Pulssignal 22 handelt es sich dagegen ein mit wesentlich höherer Frequenz oszillierendes Spannungssignal. Bei dem Pulssignal 22 handelt es sich - wie dargestellt - vorzugsweise um ein Dreieckspulssignal mit zeitlich linear ansteigenden Pulsflanken.

Die Ansteuerung 16 vergleicht die Signale 20 und 22 und gibt die Steuerpulse 18 nach Maßgabe des Vergleichsergebnisses aus. Konkret gibt die Ansteuerung 16 in der positiven Halbwelle des Referenzsignals 20 einen positiven Steuerpuls 18 aus, wenn und solange der Wert des Referenzsignals 20 den Wert des Pulssignals 22 überschreitet. In der negativen Halbwelle des Referenzsignals 20 gibt die Ansteuerung 16 dagegen einen negativen Steuerpuls 18 aus, wenn und solange der Wert des Referenzsignals 20 den Wert des Pulssignals 22 unterschreitet. Durch die positiven Steuerpulse 18 wird der hochpotentialseitige Schalter der jeweils angesteuerten Halbbrücke des Wechselrichters 10 aufgesteuert. Durch die negativen Steuerpulse 18 wird entsprechend der niederpotentialseitige Schalter der jeweils angesteuerten Halbbrücke des Wechselrichters 10 aufgesteuert.

In der Ausführung gemäß FIG 2 ist der Regler 44 beispielhaft als Zweipunkt-Regler ausgeführt. Der Zweipunkt-Regler 44 erhöht oder erniedrigt die Pulsfrequenz 30 des Referenzsignals 22, wenn die Augenblickswerte des Ist-Stromes 46 einen Schwellwert unter- beziehungsweise überschreiten. Gemäß FIG 3 weist die Pulsfrequenz 30 in einem ersten Zeitintervall 58 einen ersten, erhöhten Wert auf, während sie und in einem zweiten Zeitintervall 50 einen zweiten, demgegenüber erniedrigten Wert aufweist.

FIG 4 zeigt das Zusammenspiel des Reglers 44 mit der Ansteuerung 16 an einem Anwendungsbeispiel, das schematisch vereinfacht den Betrieb einer Zentrifuge mit vorgeschaltetem Umrichter 10 gemäß FIG 2 zeigen.

In einem ersten Diagramm 62 der FIG 4 ist die Drehzahl 64 der Zentrifuge über die Zeit 50 aufgetragen. Die Zentrifuge wird in einer herkömmlichen Art und Weise im drehenden Betrieb ent- und beladen. Dies geschieht in einem Füllintervall 66 bei einer niedrigen Drehzahl 64. Ist der Ent- und Beladevorgang abgeschlossen, beschleunigt die Zentrifuge in einem Beschleunigungsintervall 68 auf eine höhere Drehzahl 64 und schleudert die Ladung in einem Schleuderintervall 70. Abschließend bremst die Zentrifuge in einem Bremsintervall 72 auf die niedrige Drehzahl 64 ab, wird entladen und erneut beladen. Derartige Zentrifugen werden beispielsweise in der Milchproduktion zum Entrahmen von Milch verwendet.

In einem zweiten Diagramm 74 der FIG 4 ist der Laststrom 46, den der Motor der Zentrifuge aus dem Umrichter 10 zieht, über die Zeit 50 aufgetragen. Der Laststrom 46 ist abhängig vom Drehmoment, das der Motor der Zentrifuge aufbringen muss, um die Zentrifuge zu beschleunigen und abzubremsen. Daher ist der Laststrom 46 während des Beschleunigungs- und Bremsintervalls 68 und 72 hoch. Im Schleuderintervall 70 ist der Laststrom 46 gering, da hier keine Massen be- und entschleunigt werden müssen. Im Füllintervall 66 treten kleine Stromspitzen auf. Diese Stromspitzen resultieren aus dem Befüllen der Zentrifuge im laufenden Betrieb, da das - bei Einfüllen zunächst nicht rotierende - Füllgut auf die niedrige Drehzahl 64 der Zentrifuge beschleunigt werden muss. Im Diagramm 74 ist zusätzlich der Schwellwert 78 des wiederum als Zweipunkt-Regler ausgestalteten Reglers 44 eingezeichnet.

In einem dritten Diagramm 80 der FIG 4 ist die Pulsfrequenz 30, die der Regler 44 aufgrund des Vergleichs des Laststroms 46 mit dem Schellwert 78 einstellt, über die Zeit 50 aufgetragen. Zu erkennen ist dabei aus der Darstellung, wie der Zweipunktregler 44 die Pulsfrequenz 30 im Beschleunigungsintervall 68 und im Abbremsintervall 72 sowie während der Stromspitzen, die beim Zuführen des Füllgutes im Füll-Intervall 66 entstehen, erhöht. In beispielhafter Ausführung wechselt der Regler 44 die Pulsfrequenz 30 zwischen den Werten 2kHz und 8kHz.

Die Wirkung des Reglers 44 auf die Ist-Temperatur 6 des Chips 8 ist im vierten Diagramm 82 der FIG 4 gezeigt, in dem mit durchgezogener Linie der Verlauf der Ist-Temperatur 6 über die Zeit 50 aufgetragen ist, wie er sich aufgrund der Regelung ergibt. In gestrichelter Linie 84 ist zu Vergleichszwecken der Verlauf der Ist-Temperatur 6 angetragen, wie er sich ohne den Regler 44 - und entsprechend bei zeitlich konstant gehaltener Pulsfrequenz 30 - ergeben würde.

Der Darstellung ist zu entnehmen, dass der ohne Regelung zu erwartende Temperaturhub 88 durch den Regler 44 auf einen kleineren Temperaturhub 90 gesenkt werden kann. Beispielsweise kann bei einem typischen Zentrifugenmotor der Temperaturhub 88, 90 des den Motor antreibenden Umrichters 10 von 45°C auf ca. 35°C erniedrigt werden.

Der reduzierte Temperaturhub 90 entsteht vor allem dadurch, dass eine geringere Belastung durch einen von der Zentrifuge abgerufenen Laststrom 46 zumindest teilweise durch die erhöhte Pulsfrequenz 30 ausgeglichen wird. Die erhöhte Pulsfrequenz 30 ersetzt somit die fehlende thermische Belastung der geringeren Laststroms 46.

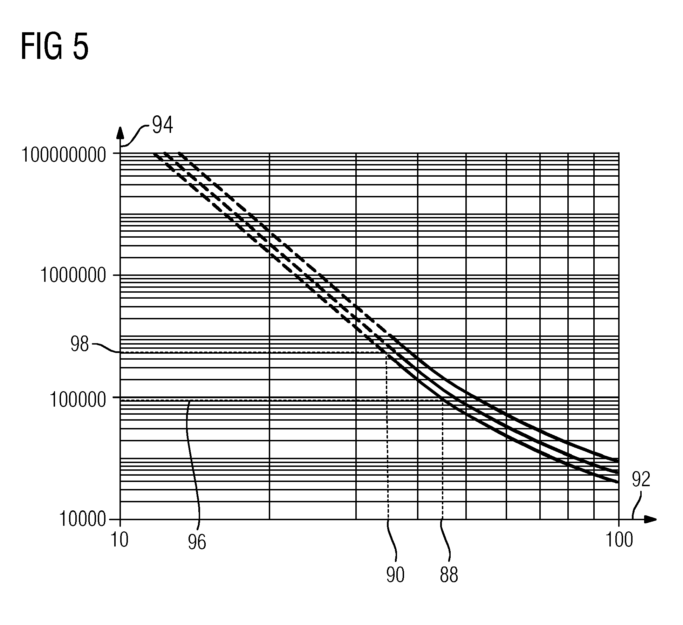

FIG 5 zeigt ein Lastwechseldiagramm zur Auswertung der Messergebnisse aus FIG 4, in dem über den Temperaturhub 92 die Lastwechselfestigkeit 94 aufgetragen ist. Die Lastwechselfestigkeit 94 gibt im Wesentlichen an, wie oft im Mittel der Chip 8 aus FIG 1 oder 2 einen thermischen Lastwechsel erträgt, bevor er in seiner Funktion versagt. Die in FIG 5 dargestellten Kurven entsprechen unterschiedlichen Maximaltemperaturen für einen gekühlten Chip 8.

Aus FIG 5 ist ersichtlich, dass sich eine vergleichsweise geringe Reduzierung des typischen Temperaturhubs 92 in einer vergleichsweise großen Erhöhung der Lastwechselfestigkeit 96 äußert. Beispielsweise lässt sich die Lastwechselfestigkeit des beschriebenen Umrichters 10 bei Reduzierung des Temperaturhubs 92 von 45°C auf 35°C um etwa 500% steigern.

Die Erfindung ist nicht auf die vorstehend beschriebenen Ausführungsbeispiele beschränkt. Vielmehr können andere Ausführungsformen und Weiterführungen der Erfindung von dem Fachmann anhand der Beschreibung abgeleitet werden. Insbesondere können Einzelmerkmale der beschriebenen Ausführungsbeispiele weggelassen, modifiziert oder in anderer Weise kombiniert werden, ohne die Erfindung zu verlassen.

## Patentansprüche

1. Regler (4,44) zum Vorgeben einer Pulsfrequenz (30) für eine Hilfsspannung (22), wobei die Hilfsspannung (22) zum Erzeugen von Ansteuersignalen (18) für einen Wechselrichter (10) vorgesehen ist und eine Pulsweitenmodulation für eine von dem Wechselrichter (10) auszugebene Spannung vorgibt, wobei der Regler (4,44) dazu vorgesehen ist, die Temperatur (6) des Wechselrichters (10) oder eine damit korrelierte Größe zu erfassen und die Pulsfrequenz (30) derart einzustellen, dass die Temperatur (6) des Wechselrichters (10) einem Solltemperaturverlauf (34) folgt.

2. Regler (4,44) nach Anspruch 1, der dazu vorgesehen ist, einen zeitlich konstanten Verlauf der Solltemperaturverlauf (34) einzustellen.

3. Regler (4,44) nach Anspruch 1 oder 2, der dazu vorgesehen ist, die Pulsfrequenz (30) innerhalb eines vorgegebenen Frequenzbereichs einzustellen.

4. Regler (4,44) nach Anspruch 3, wobei der Wechselrichter (10) zur elektrischen Energieversorgung eines Motors vorgesehen ist, und wobei die untere Grenzfrequenz des Frequenzbereichs derart gewählt ist, dass die Ausgabespannung (14) eine Glätte aufweist, bei der ein Momentenrippel am Motor gleich einem für den Motor maximal zulässigen Momentenrippel ist.

5. Regler (4,44) nach Anspruch 3 oder 4, wobei die obere Grenzfrequenz des Frequenzbereichs derart gewählt ist, dass die einzustellende Frequenz (26) gleich einer für den Wechselrichter (10) maximal zulässigen Frequenz ist.

6. Regler (44) nach einem der vorstehenden Ansprüche, der dazu vorgesehen ist, einen vom Wechselrichter (10) ausgegebenen Strom (46) zu erfassen und die Pulsfrequenz (30) in Abhängigkeit des Augenblickswerts des erfassten Stromes (46) zu variieren.

7. Regler nach Anspruch 5 oder 6, der dazu vorgesehen ist, einen ersten, erhöhten Wert für die Pulsfrequenz (30) einzustellen, wenn der erfasste Stromwert einen vorgegebenen Schwellwert (78) unterschreitet, und einen zweiten, erniedrigten Wert für die Pulsfrequenz (30) einzustellen, wenn der erfasste Stromwert (46) den Schwellwert (78) überschreitet.

8. Regelkreis zum Regeln der Temperatur eines Wechselrichters (10) mit einem Wechselrichter (10) als Regelstrecke, einer Temperaturerfassungseinrichtung (36) zum Erfassen der Temperatur (6) des Wechselrichters (10) sowie mit einem Regler (4,44) nach einem der vorstehenden Ansprüche.

9. Regelkreis nach Anspruch 8, wobei die Temperaturerfassungseinrichtung (36) zum Berechnen der Temperatur (6) des Wechselrichters (10) basierend auf einem Lastzustand (40) des Wechselrichters (10) vorgesehen ist.

10. Verfahren zum Vorgeben einer Pulsfrequenz (30) für eine Hilfsspannung (22), wobei die Hilfsspannung (22) zum Erzeugen von Ansteuersignalen (18) für einen Wechselrichter (10) vorgesehen ist und eine Pulsweitenmodulation für eine von dem Wechselrichter (10) auszugebene Spannung vorgibt, wobei verfahrensgemäß
- die Temperatur (6) des Wechselrichters (10) oder eine damit korrelierte Größe erfasst wird, und wobei
- die Pulsfrequenz (30) derart eingestellt wird, dass die Temperatur (6) des Wechselrichters (10) einem Solltemperaturverlauf (34) folgt.
